# EUROPEAN PATENT SPECIFICATION

(11) **EP 3 875 505 B1**
(45) Date of publication and mention of the grant of the patent: **03.01.2024**
(21) Application number: 19879723.5
(22) Date of filing: 01.11.2019
(51) Int. Cl.: D01D 5/06, D01D 10/02, D01F 6/38, C08F 220/46, D01F 9/22

(54) **ACRYLONITRILE-BASED COPOLYMER FOR CARBON FIBER**
COPOLYMER AUF ACRYLNITRILBASIS FÜR KOHLENSTOFFASERN
COPOLYMÈRE À BASE D'ACRYLONITRILE POUR FIBRE DE CARBONE

(30) Priority: 02.11.2018 KR 20180133738
(43) Date of publication of application: 08.09.2021
(73) Proprietor: LG CHEM, LTD., Yeongdeungpo-gu, Seoul 07336 (KR)
(72) Inventor: KIM, Chang Hun, Daejeon 34122 (KR); KIM, Jong Gil, Daejeon 34122 (KR); KIM, Hyun Min, Daejeon 34122 (KR); KIM, Yeon Soo, Daejeon 34122 (KR); CHO, Jeong Hun, Daejeon 34122 (KR); HAN, Hye Jin, Daejeon 34122 (KR); CHO, Joon Hee, Daejeon 34122 (KR)
(74) Representative: Goddar, Heinz J.
(86) International application number: PCT/KR2019/014748
(87) International publication number: WO 2020/091524

(56) References cited:
- EP-A1- 3 875 504
- CN-A- 102 102 234
- CN-A- 104 562 222
- CN-A- 104 562 222
- CN-B- 102 733 011
- JP-A- S4 987 825
- JP-A- S53 123 453
- JP-A- 2001 181 925
- KR-B1- 100 377 242
- US-A- 3 917 776
- US-A- 4 349 523

## Description

### [Technical Field]

### Cross-Reference to Related Application

The present application claims priority to and the benefit of Korean Patent Application No. 10-2018-0133738, filed on November 2, 2018.

### Technical Field

The present invention relates to an acrylonitrile-based copolymer for a carbon fiber, and specifically, to an acrylonitrile-based copolymer for a carbon fiber which is capable of being manufactured as an acrylonitrile-based fiber exhibiting excellent circularity.

### [Background Art]

Carbon fibers are fibrous carbon materials that are composed of carbon atoms at 90 wt% or more of the total weight and mean fibers obtained by pyrolyzing, in an inert atmosphere, an acrylonitrile-based polymer and a fiber-shaped precursor made from pitch or rayon which is a petroleum- or coal-based hydrocarbon residue.

Carbon fibers are materials having both the structural and textural characteristics of carbon and a fiber shape and are excellent in heat resistance, chemical stability, electrical and thermal conductivity, dimensional stability according to low-temperature expandability, low density, friction/wear properties, X-ray transmittance, electromagnetic shielding, biocompatibility, flexibility, and the like. In addition, carbon fibers may be provided with outstanding adsorbability according to an activation condition.

The acrylonitrile-based copolymer is being widely used as a raw material of a carbon fiber precursor. As a method of preparing the acrylonitrile-based copolymer, solution polymerization is commonly used. Solution polymerization is a method using a monomer, an initiator, and a reaction solvent and has an advantage in which, since a copolymer solution itself can be used as a spinning solution, a process of dissolving a copolymer in a spinning solvent is not required.

Meanwhile, since the mechanical properties of carbon fiber are affected by the morphology of an acrylonitrile-based fiber which is a precursor, the morphology of an acrylonitrile-based fiber needs to be adjusted from a spinning process. In particular, when an acrylonitrile-based fiber is manufactured by wet spinning, a coagulation rate of an acrylonitrile-based copolymer which is a raw material is known to greatly affect the morphology of a fiber. Accordingly, ammonia was conventionally added to an acrylonitrile-based copolymer solution to adjust the coagulation rate of an acrylonitrile-based copolymer. However, an ammonia addition process was additionally required, and additional safety management equipment for ammonia which is a toxic gas, needed to be installed, causing manufacturing costs to be increased.

Therefore, there is a demand for the development of an acrylonitrile-based copolymer that can be manufactured as an acrylonitrile-based fiber for a carbon fiber with excellent morphology by wet spinning without separate ammonia treatment.

JP S49 87825 A elates to a method for producing carbon fibre, and more particularly, to a method having a high strength and a high elastic modulus from an acrylic polymer monomer.CN 1 02 1 02 234 A discloses a ternary copolymerization highly hydrophilic polyacrylonitrile-based carbon fiber spinning solution, which consists of the following raw materials: acrylonitrile serving as a main monomer, a comonomer 1, a comonomer 2, azodiisobutyronitrile serving as an initiator, and an organic solvent, wherein the weight ratio of the main monomer to the comonomer 1 to the comonomer 2 is (90.0-99.5):(0.45-5.0):(0.05-5.0); the using amount of the azodiisobutyronitrile serving as the initiator is 0.3 to 2.0 percent based on the total weight of the monomers; and the monomers account for 10 to 25 mass percent of the solution.

CN 104 562 222 A discloses a preparation method of a high-solid-content polyacrylonitrile-based carbon fiber spinning solution with controllable viscosity.

JP S53 733 011 B discloses discloses an acrylic polymer solution comprising a mixture comprising acrylonitrile (AN), sodium methallyl sulfonate (SMAS), and itaconic acid (IA).

### [Disclosure]

### [Technical Problem]

The present invention provides an acrylonitrile-based copolymer for a carbon fiber which exhibits excellent circularity without separately carrying out a hydrophilization process.

Also, the present invention provides an acrylonitrile-based copolymer for a carbon fiber which exhibits excellent spinnability and minimized side reactions during a fireproofing process.

### [Technical Solution]

One aspect of the present invention provides an acrylonitrile-based copolymer for a carbon fiber which includes a sulfonate-based monomer unit, a carboxylic acid-based monomer unit, and an acrylonitrile-based monomer unit, wherein the acrylonitrile-based copolymer for a carbon fiber includes the sulfonate-based monomer unit at 0.55 to 1.55 mol%, and the carboxylic acid-based monomer unit at 0.80 to 1.30 mol%, and the acrylonitrile-based monomer unit is included as the remainder so that the total molar amount of the acrylonitrile-based copolymer for a carbon fiber is 100 mol%.

### [Advantageous Effects]

An acrylonitrile-based copolymer for a carbon fiber according to the present invention can be manufactured as an acrylonitrile-based fiber exhibiting excellent circularity without separately carrying out a hydrophilization process. In addition, excellent spinnability and the minimization of side reactions occurring during a fireproofing process can be realized.

### [Description of Drawings]

FIG. 1 is a scanning electron microscope (SEM) image of washed acrylonitrile-based coagulated yarn of Example 2.
FIG. 2 is an SEM image of washed acrylonitrile-based coagulated yarn of Comparative Example 1.

### [Modes of the Invention]

Hereinafter, the present invention will be described in more detail to facilitate understanding of the present invention.

Terms and words used in this specification and the claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technological spirit of the present invention.

In the present invention, the circularity may be measured by manufacturing coagulated yarn using an acrylonitrile-based copolymer solution and then analyzing the coagulated yarn through a scanning electron microscope (SEM) image to determine the ratio of the major axis to the minor axis (major axis/minor axis).

In the present invention, the C₁ to C₃ linear alkyl group may be a C₁ to C₃ straight-chain or branched-chain alkyl group. The C₁ to C₃ linear alkyl group may be one or more selected from the group consisting of a methyl group, an ethyl group, a propyl group, and an isopropyl group and is preferably a methyl group.

In the present invention, the C₁ to C₃ linear alkylene group may be a C₁ to C₃ straight-chain or branched-chain alkylene group. The C₁ to C₃ linear alkylene group may mean that the C₁ to C₃ linear alkyl group has two binding sites (i.e., a divalent alkyl group).

In the present invention, an alkali metal may be one or more selected from the group consisting of lithium, sodium, potassium, rubidium, cesium, and francium and is preferably sodium.

### 1. Acrylonitrile-based copolymer for carbon fiber

An acrylonitrile-based copolymer for a carbon fiber according to an embodiment of the present invention includes a sulfonate-based monomer unit, a carboxylic acid-based monomer unit, and an acrylonitrile-based monomer unit.

The sulfonate-based monomer unit may be included at 0.55 to 1.55 mol%, preferably 0.60 to 1.50 mol%, and more preferably 0.80 to 1.30 mol%, with respect to the total molar amount of the acrylonitrile-based copolymer for a carbon fiber. When the above-described condition is satisfied, the acrylonitrile-based copolymer for a carbon fiber can be manufactured as a fiber which exhibits excellent circularity without separately carrying out a hydrophilization process. In addition, a spinning solution including the acrylonitrile-based copolymer for a carbon fiber has an appropriate viscosity, and thus spinnability can be improved. Additionally, a fireproofing process can be carried out at an appropriate temperature, and thus manufacturing efficiency can be enhanced. Below the above-described range, a fiber which exhibits excellent circularity may not be manufactured. In addition, the viscosity of a spinning solution including the acrylonitrile-based copolymer for a carbon fiber is increased, and thus spinnability may be degraded, and a coagulation rate may be significantly lowered during a coagulation process. Above the above-described range, a fiber may not be coagulated but swelled by a coagulation solution during a coagulation process. In addition, a fiber may be manufactured with a skin-core structure in which only the surface of coagulated yarn manufactured by a coagulation process is coagulated and the inside thereof is not coagulated. Additionally, side reactions occur in addition to cyclization during a fireproofing process, and thus the material properties of carbon fiber which is a final product may be degraded.

The sulfonate-based monomer unit may be a unit derived from a monomer represented by Chemical Formula 1 below:

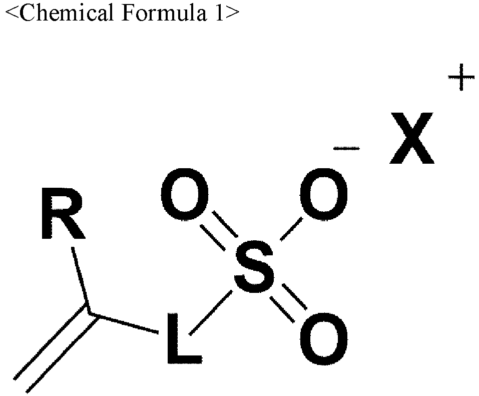

In Chemical Formula 1,
R is hydrogen or a C₁ to C₃ linear alkyl group,
L is a C₁ to C₃ linear alkylene group, and
X is an alkali metal.

Since L of the compound represented by Chemical Formula 1 is an alkylene group, L is not reactive to a radical, and thus a polymerization conversion rate may be increased. In addition, since the size of the molecular structure of the compound is small, the compound may be less likely to serve as a defect during a fireproofing process.

However, when L includes an arylene group, an amide group, or the like, the size of the molecular structure of the compound becomes larger, and thus the cyclization between acrylonitrile-based monomers, which proceeds during a fireproofing process, may not be smoothly carried out due to steric hindrance caused by the compound represented by Chemical Formula 1.

Since X of the compound represented by Chemical Formula 1 is an alkali metal, the conventional problems caused by ammonia gas generated during a spinning process, that is, degradation of a working environment and a safe environment may be solved.

The sulfonate-based monomer unit is preferably a unit derived from one or more selected from the group consisting of sodium allyl sulfonate and sodium methallyl sulfonate.

The carboxylic acid-based monomer unit is included at 0.80 to 1.30 mol% with respect to the total molar amount of the acrylonitrile-based copolymer for a carbon fiber. When the above-described range is satisfied, a fireproofing initiation temperature can be lowered, and side reactions can be prevented from occurring during a fireproofing process. At amounts below the above-described range, a fireproofing initiation temperature may be increased. At amounts above the above-described range, side reactions may occur during a fireproofing process.

The carboxylic acid-based monomer unit may be a unit derived from a carboxylic acid-based monomer. The carboxylic acid-based monomer may be one or more selected from the group consisting of acrylic acid, methacrylic acid, ethacrylic acid, itaconic acid, crotonic acid, citraconic acid, maleic acid, and mesaconic acid. The carboxylic acid-based monomer may preferably be itaconic acid.

The acrylonitrile-based monomer unit may be a unit derived from an acrylonitrile-based monomer. The acrylonitrile-based monomer may be one or more selected from the group consisting of acrylonitrile, methacrylonitrile, and ethacrylonitrile. The acrylonitrile-based monomer may preferably be acrylonitrile.

The acrylonitrile-based monomer unit is included as the remainder so that the total molar amount of the acrylonitrile-based copolymer for a carbon fiber is 100 mol%.

Meanwhile, the acrylonitrile-based copolymer for a carbon fiber according to an embodiment of the present invention may be in a state of a copolymer solution prepared by solution polymerization.

### 2. Method of preparing acrylonitrile-based copolymer for carbon fiber

The acrylonitrile-based copolymer for a carbon fiber according to an embodiment of the present invention may be prepared by a method comprising the steps of: 1) preparing a reaction solution comprising a monomer mixture including a sulfonate-based monomer, a carboxylic acid-based monomer, an acrylonitrile-based monomer, and an organic solvent; and 2) subjecting the reaction solution to polymerization.

Hereinafter, each step of the method of preparing the acrylonitrile-based copolymer for a carbon fiber according to an embodiment of the present invention will be described in detail.

### Step 1): Preparation of reaction solution

First, a reaction solution including a monomer mixture and an organic solvent is prepared.

The monomer mixture includes a sulfonate-based monomer, a carboxylic acid-based monomer, and an acrylonitrile-based monomer.

The sulfonate-based monomer may be included at 0.55 to 1.55 mol%, preferably 0.60 to 1.50 mol%, and more preferably 0.80 to 1.30 mol% with respect to the total molar amount of the monomer mixture.

The carboxylic acid-based monomer may be included at 0.60 to 1.40 mol%, preferably, 0.80 to 1.30 mol% with respect to the total molar amount of the monomer mixture.

The acrylonitrile-based monomer may be included as the remainder so that the total molar amount of the monomer mixture is 100 mol%.

The reason why the types and contents of the sulfonate-based monomer, carboxylic acid-based monomer, and acrylonitrile-based monomer are limited has been described in "1. Acrylonitrile-based copolymer for carbon fiber."

The organic solvent, which is a reaction solvent, is favorable for increasing the weight-average molecular weight and concentration of a copolymer in a polymerization process, as compared to an inorganic solvent. In addition, a copolymer solution after the polymerization can be directly used in a spinning process, and thus the process steps can be reduced, which can ultimately contribute to an enhancement in productivity of a precursor fiber.

The organic solvent may be one or more selected from the group consisting of dimethyl sulfoxide, dimethyl formamide, and dimethyl acetamide and is preferably dimethyl sulfoxide.

The organic solvent may be included in an amount of 200 to 500 parts by weight or 250 to 400 parts by weight with respect to 100 parts by weight of the monomer mixture and is preferably included in an amount of 250 to 400 parts by weight. When the above-described range is satisfied, the weight-average molecular weight of the acrylonitrile-based copolymer for a carbon fiber is appropriately maintained, and the viscosity of a spinning solution including the acrylonitrile-based copolymer for a carbon fiber is also appropriately maintained, and thereby a spinning process can be easily carried out.

### Step 2): Polymerization

Subsequently, the reaction solution is subjected to polymerization.

The polymerization may be carried out in the presence of an initiator.

The initiator may be one or more selected from the group consisting of azobisisobutyronitrile, 2,2'-azobis(4-methoxy-2,4-dimethylvaleronitrile), 2,2'-azobis(2,4-dimethylvaleronitrile), dimethyl 2,2'-azobis(2-methylpropionate), 2,2'-azobis(2-methylbutyronitrile), 1,1'-azobis(cyclohexane-1-carbonitrile), 2,2'-azobis[N-(2-propenyl)-2-methylpropionamide], [(cyano-1-methylethyl)azo]formamide, 2,2'-azobis(N-butyl-2-methylpropionamide), and 2,2'-azobis(N-cyclohexyl-2-methylpropionamide). The initiator can preferably be one or more selected from the group consisting of azobisisobutyronitrile, dimethyl 2,2'-azobis(2-methylpropionate), and 2,2'-azobis(2-methylbutyronitrile).

The initiator may be added in an amount of 0.5 to 1.0 part by weight or 0.6 to 0.8 parts by weight, with respect to 100 parts by weight of the monomer mixture. The initiator can be preferably added in an amount of 0.6 to 0.8 parts by weight. When the above-described condition is satisfied, a polymerization rate can be appropriately maintained, and thus a polymerization conversion rate relative to a reference time can be increased. In addition, an acrylonitrile-based copolymer for a carbon fiber which has a weight-average molecular weight suitable for a spinning process can be prepared.

The polymerization may be solution polymerization.

Meanwhile, the polymerization may include: primary polymerization of the reaction solution at a first temperature; and secondary polymerization of the reaction solution at a second temperature higher than the first temperature.

The first temperature may be 55 to 80 °C or 60 to 70 °C, and preferably 60 to 70 °C. When the above-described condition is satisfied, a polymerization rate can be appropriately maintained, and thus a polymerization conversion rate relative to a reference time can be increased. In addition, an acrylonitrile-based copolymer for a carbon fiber which has a weight-average molecular weight suitable for a spinning process can be prepared.

The second temperature may be 65 to 90 °C or 70 to 80 °C, and preferably 70 to 80 °C. When the above-described condition is satisfied, a polymerization rate can be appropriately maintained, and thus a polymerization conversion rate relative to a reference time can be increased. In addition, an acrylonitrile-based copolymer for a carbon fiber which has a weight-average molecular weight suitable for a spinning process can be prepared.

The secondary polymerization may be initiated 4 to 9 hours or 6 to 8 hours after the initiation of the primary polymerization and is preferably initiated 6 to 8 hours after the initiation of the primary polymerization. When the above-described condition is satisfied, a polymerization rate can be appropriately maintained, and thus a polymerization conversion rate relative to a reference time can be increased. In addition, an acrylonitrile-based copolymer for a carbon fiber which has a weight-average molecular weight suitable for a spinning process can be prepared.

The secondary polymerization may be carried out for 4 to 9 hours or 6 to 8 hours and is preferably carried out for 6 to 8 hours. When the above-described condition is satisfied, a polymerization rate can be appropriately maintained, and thus a polymerization conversion rate relative to a reference time can be increased. In addition, an acrylonitrile-based copolymer for a carbon fiber which has a weight-average molecular weight suitable for a spinning process can be prepared.

After the secondary polymerization is completed, an acrylonitrile-based copolymer for a carbon fiber is obtained.

### 3. Acrylonitrile-based fiber for carbon fiber

An acrylonitrile-based fiber for a carbon fiber according to another embodiment of the present invention is made of the acrylonitrile-based copolymer for a carbon fiber according to an embodiment of the present invention and has a circularity of 1.13 or less and, preferably, 1.1 or less.

When the above-described condition is satisfied, the appearance quality of a carbon fiber which is a final product can be improved.

Hereinafter, exemplary embodiments of the present invention will be described in detail so that those of ordinary skill in the art can easily carry out the present invention. However, it should be understood that the present invention can be implemented in various forms, and that the exemplary embodiments are not intended to limit the present invention thereto.

### <Method of preparing acrylonitrile-based polymer>

### Example 1

100 parts by weight of a monomer mixture including sodium methallyl sulfonate at 0.60 mol%, itaconic acid at 1.00 mol%, and acrylonitrile at 98.40 mol% was uniformly dissolved in 318 parts by weight of dimethyl sulfoxide to prepare a reaction solution.

The reaction solution was put into a reactor equipped with a stirrer, the inside of the reactor was filled with nitrogen, and then a temperature inside the reactor was raised to 60 °C at a rate of 1 °C/min. 0.6 parts by weight of azobisisobutyronitrile (AIBN) as an initiator was added, and solution polymerization was carried out for 8 hours. Afterward, a temperature inside the reactor was raised to 70 °C at a rate of 1 °C/min, and solution polymerization was further carried out for another 6 hours. After the polymerization was completed, an acrylonitrile-based copolymer solution was obtained.

### Example 2

An acrylonitrile-based copolymer solution was obtained in the same manner as in Example 1 except that a reaction solution prepared by uniformly dissolving 100 parts by weight of a monomer mixture including sodium methallyl sulfonate at 1.00 mol%, itaconic acid at 1.00 mol%, and acrylonitrile at 98.00 mol% was used.

### Example 3

An acrylonitrile-based copolymer solution was obtained in the same manner as in Example 1 except that a reaction solution prepared by uniformly dissolving 100 parts by weight of a monomer mixture including sodium methallyl sulfonate at 1.50 mol%, itaconic acid at 1.00 mol%, and acrylonitrile at 97.50 mol% was used.

### Example 4

An acrylonitrile-based copolymer solution was obtained in the same manner as in Example 1 except that a reaction solution prepared by uniformly dissolving 100 parts by weight of a monomer mixture including sodium allyl sulfonate at 0.60 mol%, itaconic acid at 1.00 mol%, and acrylonitrile at 98.40 mol% was used.

### Example 5

An acrylonitrile-based copolymer solution was obtained in the same manner as in Example 1 except that a reaction solution prepared by uniformly dissolving 100 parts by weight of a monomer mixture including sodium allyl sulfonate at 1.50 mol%, itaconic acid at 1.00 mol%, and acrylonitrile at 97.50 mol% was used.

### Comparative Example 1

An acrylonitrile-based copolymer solution was obtained in the same manner as in Example 1 except that a reaction solution prepared by uniformly dissolving 100 parts by weight of a monomer mixture including itaconic acid at 1.00 mol% and acrylonitrile at 99.00 mol% was used.

### Comparative Example 2

An acrylonitrile-based copolymer solution was obtained in the same manner as in Example 1 except that a reaction solution prepared by uniformly dissolving 100 parts by weight of a monomer mixture including sodium methallyl sulfonate at 0.50 mol%, itaconic acid at 1.00 mol%, and acrylonitrile at 98.50 mol% was used.

### Comparative Example 3

An acrylonitrile-based polymer solution was obtained in the same manner as in Example 1 except that a reaction solution prepared by uniformly dissolving 100 parts by weight of a monomer mixture including sodium methallyl sulfonate at 1.60 mol%, itaconic acid at 1.00 mol%, and acrylonitrile at 97.40 mol% was used.

### Comparative Example 4

An acrylonitrile-based polymer solution was obtained in the same manner as in Example 1 except that a reaction solution prepared by uniformly dissolving 100 parts by weight of a monomer mixture including sodium methallyl sulfonate at 1.00 mol%, itaconic acid at 0.50 mol%, and acrylonitrile at 98.50 mol% was used.

### Comparative Example 5

An acrylonitrile-based polymer solution was obtained in the same manner as in Example 1 except that a reaction solution prepared by uniformly dissolving 100 parts by weight of a monomer mixture including sodium methallyl sulfonate at 1.00 mol%, itaconic acid at 1.50 mol%, and acrylonitrile at 97.50 mol% was used.

Meanwhile, the components of the monomer mixtures according to Examples and Comparative Examples are summarized and shown in Table 1 and Table 2 below.

### Experimental Example 1

The viscosity and coagulation rate of the acrylonitrile-based copolymer solutions (acrylonitrile-based copolymer: 20 wt%) according to Examples and Comparative Examples were measured and shown in Table 1 and Table 2 below.
(1) Viscosity (poise): measured by the following conditions using a Brookfield viscometer.
   Spindle type: Cone type (CPA-52Z), Cone angle=3°, Cone radius=1.2 cm, Gap: 13 µm or less, Measurement shear rate: 10 to 20/sec, Measurement temperature: 45 °C
(2) Coagulation rate (µm/sec): Firstly, a slide glass with a size of 76 mm (width), 26 mm (length), and 1 mm (thickness) was provided as a first substrate. Two partitions with a size of 24 mm (width), 24 mm (length), and 100 µm (thickness) were disposed to be spaced an interval of 20 mm from each other on the first substrate. Then, a cover glass with a size of 40 mm (width), 24 mm (length), and 10 µm (thickness) was disposed as a second substrate on the partitions so as to manufacture a cell.

The cell was installed in an image analysis instrument (Nikon Eclipse Ti-U/DS-QilMc manufactured by Nikon), 0.01 ml of a spinning solution (polyacrylonitrile: 20 wt%, dimethyl sulfoxide: 80 wt%) was injected into the cell, and 0.05 ml of a coagulation solution was passed through the spinning solution in one direction.

In this case, the coagulation solution was composed of crosslinked melamine particles (Polybead^{®} Crosslinked Melamine Particles manufactured by Polyscience, Inc., average particle diameter: 1 µm, shape: sphere) at 0.5 wt%, water at 49.75 wt%, and dimethyl sulfoxide at 49.75 wt%.

The moving distance and moving time of crosslinked melamine particles included in the coagulation solution were measured for 1 minute from the time point at which the particles began to move.

### Experimental Example 2

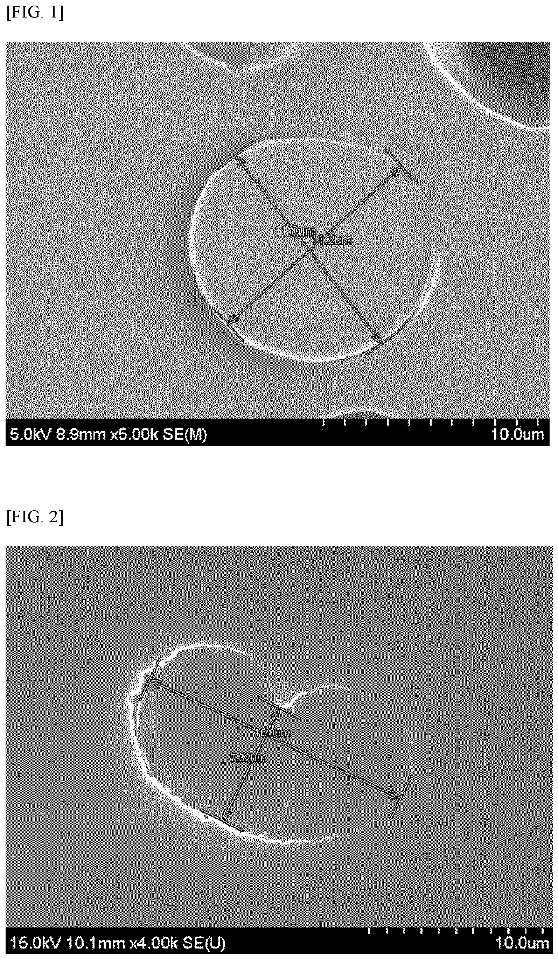

A temperature of the acrylonitrile-based copolymer solutions according to Examples and Comparative Examples was raised to 60 °C, and then the solution was discharged into a coagulation solution (temperature: 50 °C) including water and dimethyl sulfoxide in a weight ratio of 1:1 using a spinneret (diameter of hole: 0.065 mm, number of holes: 1,000) and coagulated to manufacture coagulated yarn. Meanwhile, the spinneret was disposed in the coagulation solution. The coagulated yarn was washed with water (80 °C). The circularity of the coagulated yarn thus washed was measured by scanning electron microscope (SEM) image analysis, and results thereof are shown in Table 1 and Table 2 below. In addition, the SEM image of the washed acrylonitrile-based coagulated yarn according to Example 2 is shown in FIG. 1, and the SEM image of the washed acrylonitrile-based coagulated yarn according to Comparative Example 1 is shown in FIG. 2.

### Experimental Example 3

The acrylonitrile-based coagulated yarn manufactured in Experimental Example 2 was stretched up to 15 times at 120 °C using a roller to manufacture acrylonitrile-based stretched yarn. Subsequently, while raising a temperature to 400 °C at 10 °C/min, the acrylonitrile-based stretched yarn was subjected to a fireproofing process under a nitrogen atmosphere using a differential scanning calorimeter (DSC, Q100 manufactured by TA Instruments). In addition, an exothermic onset temperature, a fireproofing initiation temperature, and a temperature at a flame retardant peak were measured, and results thereof are shown in Table 1 and Table 2 below.

**[Table 1]**

| Classification | | Comparative Examples | | Examples | | | Comparative Example |
|---|---|---|---|---|---|---|---|
| | | 1 | 2 | 1 | 2 | 3 | 3 |
| Sulfonate-based monomer (mol%) | Sodium methallyl sulfonate | - | 0.50 | 0.60 | 1.00 | 1.50 | 1.60 |
| | Sodium allyl sulfonate | - | | - | | | |
| Itaconic acid (mol%) | | 1.00 | 1.00 | 1.00 | 1.00 | 1.00 | 1.00 |
| Acrylonitrile (mol%) | | 99.00 | 98.50 | 98.40 | 98.00 | 97.50 | 97.40 |
| Viscosity (poise) | | 890 | 750 | 701 | 682 | 659 | 647 |
| Coagulation rate (µm/sec) | | 1.11 ± 0.39 | 0.68 ± 0.12 | 0.59 ± 0.36 | 0.26 ± 0.11 | 0.10 ± 0.06 | -0.04 ± 0.06 |
| Circularity | | 2.19 | 1.16 | 1.09 | 1.02 | 1.02 | 1.01 (Skin-core) |
| Fireproofing initiation temperature | | 187 | 187 | 187 | 188 | 189 | 178, 189 |
| Temperature at flame retardant peak | | 281 | 289 | 289 | 290 | 292 | 275, 286 |

**[Table 2]**

| Classification | | Comparative Example 4 | Comparative Example 5 | Example 4 | Example 5 |
|---|---|---|---|---|---|
| Sulfonate-based monomer (mol%) | Sodium methallyl sulfonate | 1.00 | 1.00 | - | - |
| | Sodium allyl sulfonate | - | - | 0.60 | 1.50 |
| Itaconic acid (mol%) | | 0.50 | 1.50 | 1.00 | 1.00 |
| Acrylonitrile (mol%) | | 98.50 | 97.50 | 98.40 | 97.50 |
| Viscosity (poise) | | 887 | 910 | 720 | 680 |
| Coagulation rate (µm/sec) | | 0.28±0.10 | 0.24±0.11 | 0.56±0.32 | 0.10±0.08 |
| Circularity | | 1.02 | 1.02 | 1.10 | 1.03 |
| Fireproofing initiation temperature | | 198 | 179, 188 | 190 | 191 |
| Temperature at flame retardant peak | | 292 | 281 | 290 | 292 |

Referring to Table 1, Table 2, FIG. 1, and FIG. 2, in the case of Example 1 to Example 3 which used monomer mixtures including sodium methallyl sulfonate at 0.60 to 1.50 mol%, the acrylonitrile-based copolymer solutions exhibited a low coagulation rate. In addition, the washed acrylonitrile-based coagulated yarn exhibited excellent circularity, and the acrylonitrile-based stretched yarn exhibited an appropriate fireproofing initiation temperature and an appropriate temperature at a flame retardant peak. On the other hand, in the case of Comparative Example 1 and Comparative Example 2 which used monomer mixtures not including sodium methallyl sulfonate and including sodium methallyl sulfonate at 0.50 mol%, the acrylonitrile-based copolymer solutions exhibited an excessively high coagulation rate. In addition, the washed acrylonitrile-based coagulated yarn exhibited poor circularity.

In the case of Comparative Example 3 which used a monomer mixture including sodium methallyl sulfonate at 1.60 mol%, the acrylonitrile-based copolymer solution exhibited an excessively low coagulation rate, and thus the acrylonitrile-based coagulated yarn made thereof was highly likely not to be contracted but rather expanded, from which it can be predicted that the acrylonitrile-based copolymer solution will not be suitable for a spinning process. In addition, although the washed acrylonitrile-based coagulated yarn of Comparative Example 3 exhibited excellent circularity, it was manufactured with a skin-core structure. Additionally, in the case of the acrylonitrile-based stretched yarn of Comparative Example 3, two fireproofing initiation temperatures and two temperatures at a flame retardant peak were observed, from which it can be assumed that a side reaction occurred.

In the case of Comparative Example 4 which used a monomer mixture including itaconic acid at 0.50 mol%, the acrylonitrile-based stretched yarn exhibited an excessively high fireproofing initiation temperature such that fireproofing energy efficiency was degraded, and a fiber was likely to be damaged due to excessive heat storage and heat generation.

In the case of Comparative Example 5 which used a monomer mixture including itaconic acid at 1.50 mol%, the acrylonitrile-based copolymer solution exhibited an excessively high viscosity, causing a spinning process not to proceed smoothly. In addition, in the case of the acrylonitrile-based stretched yarn, two fireproofing initiation temperatures were observed, from which it can be assumed that a side reaction occurred.

In the case of Example 4 and Example 5 which used monomer mixtures including sodium allyl sulfonate at 0.60 mol% and 1.50 mol%, respectively, the acrylonitrile-based copolymer solutions exhibited an appropriate viscosity and an appropriate coagulation rate, the washed acrylonitrile-based coagulated yarn also exhibited an appropriate circularity, and the acrylonitrile-based stretched yarn also exhibited an appropriate fireproofing initiation temperature and an appropriate temperature at a flame retardant peak.

## Claims

1. An acrylonitrile-based copolymer for a carbon fiber, comprising a sulfonate-based monomer unit, a carboxylic acid-based monomer unit, and an acrylonitrile-based monomer unit,
wherein the acrylonitrile-based copolymer for a carbon fiber includes the sulfonate-based monomer unit at 0.55 to 1.55 mol%, the carboxylic acid-based monomer unit at 0.80 to 1.30 mol%, and the acrylonitrile-based monomer unit is included as the remainder so that the total molar amount of the acrylonitrile-based copolymer for a carbon fiber is 100 mol%.

2. The acrylonitrile-based copolymer for a carbon fiber of claim 1, wherein the acrylonitrile-based copolymer for a carbon fiber includes the sulfonate-based monomer unit at 0.60 to 1.50 mol%.

3. The acrylonitrile-based copolymer for a carbon fiber of claim 1, wherein the sulfonate-based monomer unit is a unit derived from a monomer represented by Chemical Formula 1 below: 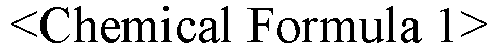 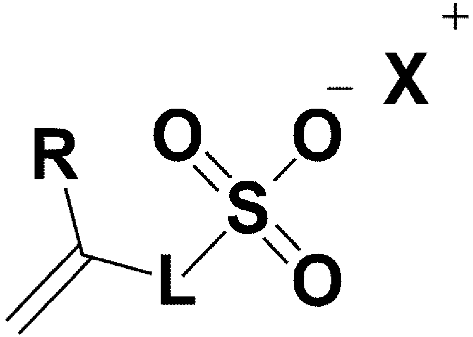
wherein, in Chemical Formula 1,
R is hydrogen or a C₁ to C₃ linear alkyl group,
L is a C₁ to C₃ linear alkylene group, and
X is an alkali metal.

4. The acrylonitrile-based copolymer for a carbon fiber of claim 1, wherein the sulfonate-based monomer unit is a unit derived from one or more selected from the group consisting of sodium allyl sulfonate and sodium methallyl sulfonate.

5. The acrylonitrile-based copolymer for a carbon fiber of claim 1, wherein the acrylonitrile-based monomer unit is a unit derived from one or more selected from the group consisting of acrylonitrile, methacrylonitrile, and ethacrylonitrile.

6. The acrylonitrile-based copolymer for a carbon fiber of claim 1, wherein the carboxylic acid-based monomer unit is a unit derived from one or more selected from the group consisting of acrylic acid, methacrylic acid, ethacrylic acid, itaconic acid, crotonic acid, citraconic acid, maleic acid, and mesaconic acid.

7. The acrylonitrile-based copolymer for a carbon fiber of claim 1, wherein the carboxylic acid-based monomer unit is a unit derived from itaconic acid.

8. An acrylonitrile-based fiber for a carbon fiber, which is made of the acrylonitrile-based copolymer for a carbon fiber according to any one of claims 1 to 8 and has a circularity of 1.13 or less measured by manufacturing coagulated yarn using an acrylonitrile-based copolymer solution and then analyzing the coagulated yarn through a scanning electron microscope (SEM) image to determine the ratio of the major axis to the minor axis (major axis/minor axis).

## Patentansprüche

1. Copolymer auf Acrylnitrilbasis für eine Kohlenstofffaser, umfassend eine Monomereinheit auf Sulfonatbasis, eine Monomereinheit auf Carbonsäurebasis und eine Monomereinheit auf Acrylnitrilbasis,
wobei das Copolymer auf Acrylnitrilbasis für eine Kohlenstofffaser die Monomereinheit auf Sulfonatbasis in einer Menge von 0,55 bis 1,55 Mol-%, die Monomereinheit auf Carbonsäurebasis in einer Menge von 0,80 bis 1,30 Mol-% und die Monomereinheit auf Acrylnitrilbasis als Rest umfasst, so dass die Gesamtmolmenge des Copolymers auf Acrylnitrilbasis für eine Kohlenstofffaser 100 Mol-% beträgt.

2. Copolymer auf Acrylnitrilbasis für eine Kohlenstofffaser nach Anspruch 1, wobei das Copolymer auf Acrylnitrilbasis für eine Kohlenstofffaser die Monomereinheit auf Sulfonatbasis in einer Menge von 0,60 bis 1,50 Mol-% umfasst.

3. Copolymer auf Acrylnitrilbasis für eine Kohlenstofffaser nach Anspruch 1, wobei die Monomereinheit auf Sulfonatbasis eine Einheit ist, die von einem Monomer abgeleitet ist, das durch die folgende chemische Formel 1 dargestellt ist: 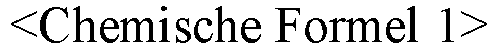 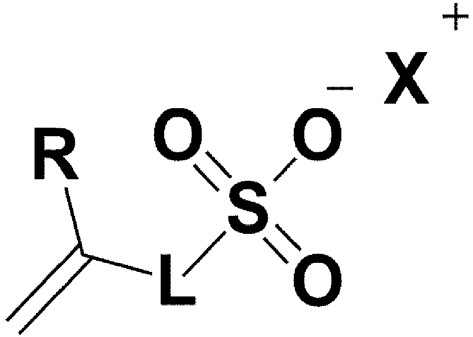
wobei in der chemischen Formel 1
R Wasserstoff oder eine lineare C₁ - bis C₃ -Alkylgruppe ist,
L eine lineare C₁ - bis C₃ -Alkylengruppe ist und
X ein Alkalimetall ist.

4. Copolymer auf Acrylnitrilbasis für eine Kohlenstofffaser nach Anspruch 1, wobei die Monomereinheit auf Sulfonatbasis eine Einheit ist, die von einem oder mehreren abgeleitet ist, die aus der Gruppe ausgewählt sind, die aus Natriumallylsulfonat und Natriummethallylsulfonat besteht.

5. Copolymer auf Acrylnitrilbasis für eine Kohlenstofffaser nach Anspruch 1, wobei die Monomereinheit auf Acrylnitrilbasis eine Einheit ist, die von einem oder mehreren abgeleitet ist, die aus der Gruppe ausgewählt sind, die aus Acrylnitril, Methacrylnitril und Ethacrylnitril besteht.

6. Copolymer auf Acrylnitrilbasis für eine Kohlenstofffaser nach Anspruch 1, wobei die Monomereinheit auf Carbonsäurebasis eine Einheit ist, die von einem oder mehreren abgeleitet ist, die aus der Gruppe ausgewählt sind, die aus Acrylsäure, Methacrylsäure, Ethacrylsäure, Itaconsäure, Crotonsäure, Citraconsäure, Maleinsäure und Mesaconsäure besteht.

7. Copolymer auf Acrylnitrilbasis für eine Kohlenstofffaser nach Anspruch 1, wobei die Monomereinheit auf Carbonsäurebasis eine Einheit ist, die von Itaconsäure abgeleitet ist.

8. Faser auf Acrylnitrilbasis für eine Kohlenstofffaser, die aus dem Copolymer auf Acrylnitrilbasis für eine Kohlenstofffaser nach einem der Ansprüche 1 bis 8 hergestellt ist und eine Zirkularität von 1,13 oder weniger aufweist, gemessen durch Herstellen von koaguliertem Garn unter Verwendung einer Copolymerlösung auf Acrylnitrilbasis und dann Analysieren des koagulierten Garns durch ein Rasterelektronenmikroskop-(REM)-Bild, um das Verhältnis der Hauptachse zur Nebenachse (Hauptachse/Nebenachse) zu bestimmen.

## Revendications

1. Copolymère à base d'acrylonitrile pour une fibre de carbone, comprenant une unité de monomère à base de sulfonate, une unité de monomère à base d'acide carboxylique et une unité de monomère à base d'acrylonitrile,
dans lequel le copolymère à base d'acrylonitrile pour une fibre de carbone inclut l'unité de monomère à base de sulfonate à raison de 0,55 à 1,55 % en moles, l'unité de monomère à base d'acide carboxylique à raison de 0,80 à 1,30 % en moles, et l'unité de monomère à base d'acrylonitrile est inclue comme étant le reste de sorte que la quantité molaire totale du copolymère à base d'acrylonitrile pour une fibre de carbone est 100 % en moles.

2. Copolymère à base d'acrylonitrile pour une fibre de carbone selon la revendication 1, dans lequel le copolymère à base d'acrylonitrile pour une fibre de carbone inclut l'unité de monomère à base de sulfonate à raison de 0,60 à 1,50 % en moles.

3. Copolymère à base d'acrylonitrile pour une fibre de carbone selon la revendication 1, dans lequel l'unité de monomère à base de sulfonate est une unité dérivée d'un monomère représenté par la Formule chimique 1 ci-dessous: 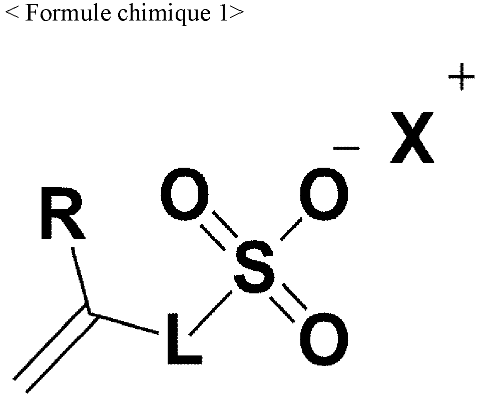
dans lequel, dans la Formule chimique 1,
R est un hydrogène ou un groupe alkyl linéaire en C₁ à C₃,
L est un groupe alkylène linéaire en C₁ à C₃, et
X est un métal alcalin.

4. Copolymère à base d'acrylonitrile pour une fibre de carbone selon la revendication 1, dans lequel l'unité de monomère à base de sulfonate est une unité dérivée d'un ou plusieurs éléments sélectionnés dans le groupe constitué de sulfonate d'allyle de sodium et sulfonate de méthallyle de sodium.

5. Copolymère à base d'acrylonitrile pour une fibre de carbone selon la revendication 1, dans lequel l'unité de monomère à base d'acrylonitrile est une unité dérivée d'un ou plusieurs éléments sélectionnés dans le groupe constitué d'acrylonitrile, méthacrylonitrile et éthacrylonitrile.

6. Copolymère à base d'acrylonitrile pour une fibre de carbone selon la revendication 1, dans lequel l'unité de monomère à base d'acide carboxylique est une unité dérivée d'un ou plusieurs éléments sélectionnés dans le groupe constitué de l'acide acrylique, l'acide méthacrylique, l'acide éthacrylique, l'acide itaconique, l'acide crotonique, l'acide citraconique, l'acide maléique et l'acide mésaconique.

7. Copolymère à base d'acrylonitrile pour une fibre de carbone selon la revendication 1, dans lequel l'unité de monomère à base d'acide carboxylique est une unité dérivée de l'acide itaconique.

8. Fibre à base d'acrylonitrile pour une fibre de carbone, laquelle est faite du copolymère à base d'acrylonitrile pour une fibre de carbone selon l'une quelconque des revendications 1 à 8 et a une circularité égale ou inférieure à 1,13, mesurée en fabriquant un fil coagulé en utilisant une solution de copolymère à base d'acrylonitrile, puis en analysant le fil coagulé par une image de microscope électronique à balayage (MEB) pour déterminer le rapport de l'axe majeur à l'axe mineur (axe majeur/axe mineur).
